# EUROPEAN PATENT SPECIFICATION

(11) **EP 1 387 267 B1**
(45) Date of publication and mention of the grant of the patent: **12.10.2011**
(21) Application number: 02017040.3
(22) Date of filing: 29.07.2002
(51) Int. Cl.: G06F 9/48

(54) **Method and computer system for job scheduling**
Verfahren und Computersystem zur Jobfolgeplanung
Procédé et système informatique pour la planification de travail

(43) Date of publication of application: 04.02.2004
(73) Proprietor: SAP AG, 69190 Walldorf (DE)
(72) Inventor: Babutzka, Dieter, 69242 Mühlhausen-Rettigheim (DE); Klotzek, Hans-Georg, 69168 Wiesloch (DE)
(74) Representative: Rocke, Carsten

(56) References cited:
- EP-A- 1 011 045
- GB-A- 2 355 319
- HÖGL H.: "GPC - A JOB SCHEDULER (NOT ONLY) FOR RADAR IMAGE PROCESSING" GERMAN AEROSPACE CENTER, [Online] - 11 September 1998 (1998-09-11) pages 1-11, XP002229879 WEßLING, DE Retrieved from the Internet: <URL:http://www.foretec.com/python/worksho ps/1998-11/proceedings/posters/hoegl/hoegl .html> [retrieved on 2003-02-03]

## Description

### Field of the Invention

The present invention generally relates to electronic data processing, and more particularly, relates to methods, computer program products and systems for job scheduling.

### Background of the Invention

Computer networks often include multiple computers. Typically, many tasks in a computer do not require user-interaction, e.g., a system backup or a payroll run in an Enterprise Resource Planning (ERP) system. These tasks are normally performed by background jobs (also referred to as jobs hereinafter). The jobs are scheduled with specific start conditions (e.g., start time). If such a specific start condition is fulfilled, a job scheduler starts the corresponding job in a corresponding computer where the job is executed without user interaction. Jobs are typically executed at a time when the load of a corresponding computer through user-interaction processes is low in order to avoid slowing down system response times for online users. In many cases, a certain task is performed by multiple jobs. For example, a complex payroll run in an ERP system can include hundreds of jobs. Usually there are interdependencies between these jobs. For example, a second job cannot start before a first job has ended because the first job generates output data that are needed as input for the second job. Typically, a job scheduler for managing jobs of multiple computers uses a job sequence that defines start conditions for each job and defines interdependencies between various jobs, even across multiple computers. This information may even across multiple computers. This information may come from local job administration programs (e.g., batch control processors) of the various computers. A problem can occur when the first job starts a child job and the start of the second job is dependent on the successful completion of the child job and this dependency is implicit, meaning that it is not explicitly defined in the job sequence definition used by the scheduler. In other words, the child job is typically created at runtime and not known by the corresponding batch control processor until it actually starts. The creation of a child job (or multiple child jobs) may serve the purpose of dynamically distributing workload. Sometimes, in prior art computer networks the second job starts when the first job is completed but the child job is still running or is unsuccessfully completed, which can then lead to a failure of the second job. When a further computer in the computer network has a third job that depends on the successful completion of the first job, typically a network scheduler is used to coordinate the start of each job throughout the whole computer network by using an appropriate start condition for each job. In prior art networks the network scheduler starts the third job once the first job is completed successfully. However, completing the first job successfully does not mean necessarily that the child job was completed successfully.

A UK patent application, publication number GB2355319, discloses a job scheduler running on a client machine. The scheduler has an associated task file comprising task definitions and conditions for execution. The scheduler comprises a thread for monitoring for a change to the task file and a thread for reading the task file and for executing tasks of the task file.

There is an ongoing need to improve job-management in the presence of child jobs.

### Summary of the Invention

The technical problem of job failure in the presence of child jobs is solved by a method according to claim 1.

The method for job scheduling in the presence of child jobs includes the following steps:
a) A network scheduler (also referred to as scheduler, hereinafter) defines a static dependency between a first job and a second job as an initial start condition for the second job so that the start of the second job depends on the successful completion of the first job.
b) The scheduler determines that the first job has at least one child job.
c) The scheduler changes the initial start condition into an adjusted start condition for the second job by adding an implicit dependency so that the start of the second job further depends on the successful completion of the at least one child job.

Further embodiments of the invention are a computer program product according to claim 9 and a computer according to claim 7.

When the scheduler becomes aware of child jobs that are created by a first job, the scheduler can adjust a start condition for a second job that depends on the successful completion of the first job and its child jobs so that the start condition is fulfilled not before the first job and its child jobs are successfully completed. This allows the scheduler to prevent job failure of the second job because the second job does not start before all relevant input data is created by the first job and its child jobs.

The aspects of the invention will be realized and attained by means of the elements and combinations particularly pointed out in the appended claims. It is to be understood that both the foregoing general description and the following detailed description are exemplary and explanatory only and are not restrictive of the invention as described.

### Brief Description of the Drawings

FIG. 1 is a simplified block diagram of a computer system that can be used with an embodiment of the present invention;
FIG. 2 is a simplified block diagram of a scheduler that includes a job-net in one embodiment of the invention; and
FIG. 3 illustrates how the scheduler can interact with a local batch control processor in one embodiment of the invention.

### Detailed Description of the Invention

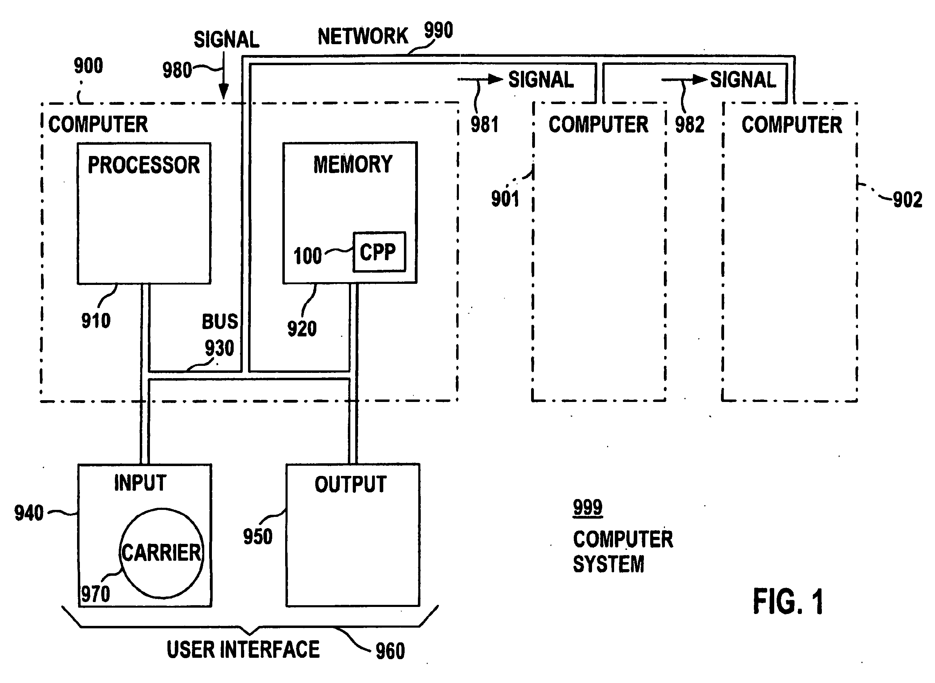

FIG. 1 is a simplified block diagram of an exemplary computer system that implements embodiments of the present invention. Computer system 999 includes computer 900 and has a plurality of further computers 901, 902 (or 90q, with q=0...Q-1, Q any number).

Computer 900 can communicate with further computers 901, 902 over computer network 990. Computer 900 has processor 910, memory 920, bus 930, and, optionally, input device 940 and output device 950 (I/O devices, user interface 960). As illustrated, the invention is implemented by computer program product 100 (CPP), program carrier 970 or program signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop or hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), a digital signal processor (DSP), or the like.

Memory 920 symbolizes elements that temporarily or permanently store data and instructions. Although memory 920 is illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, magnetic storage media, optical storage media, semiconductor storage media or by any other computer readable storage media.

Memory 920 can store support modules such as, e.g., a basic input output system (BIOS), an operating system (OS), a program library, a compiler, an interpreter, or a text processing tool.

CPP 100 implements program instructions and-optionally - data that cause processor 910 to execute method steps of the present invention. In other words, CPP 100 can control the operation of computer 900 so that it operates in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture embodying a computer readable medium having computer readable program code that can be used to cause a computer to perform methods of the present invention. Further, program signal 980 can also embody CPP 100.

Input device 940 provides data and instructions for processing by computer 900. Device 940 can be, for example, a keyboard, a pointing device (e.g., mouse, trackball, cursor direction keys), microphone, joystick, game pad, scanner or disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 presents instructions and data that have been processed. For example, this can be a monitor or a display, e.g., a cathode ray tube (CRT) or flat panel display or liquid crystal display (LCD), a speaker, printer, plotter or vibration alert device. Similar as above, output device 950 can communicate with the user, but it can also communicate with further computers.

Input device 940 and output device 950 can be combined to a single device. Any device 940 and 950 can be optionally provided.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional).

Networks (as network 990) are commonplace in offices, enterprise-wide computer networks, intranets and the internet. Network 990 can be a wired or a wireless network. Examples of network implementations can be local area networks (LAN), wide area networks (WAN), public switched telephone networks (PSTN) and Integrated Services Digital Networks (ISDN). Other examples of network implementations are known in the art.

A variety of transmission protocols and data formats are known, for example, transmission control protocol/internet protocol (TCP/IP), hypertext transfer protocol (HTTP), secure HTTP (HTTPS) or wireless application protocol (WAP).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases such as "the computer provides" and "the program provides" are convenient abbreviation to express actions by a computer that is controlled by a program.

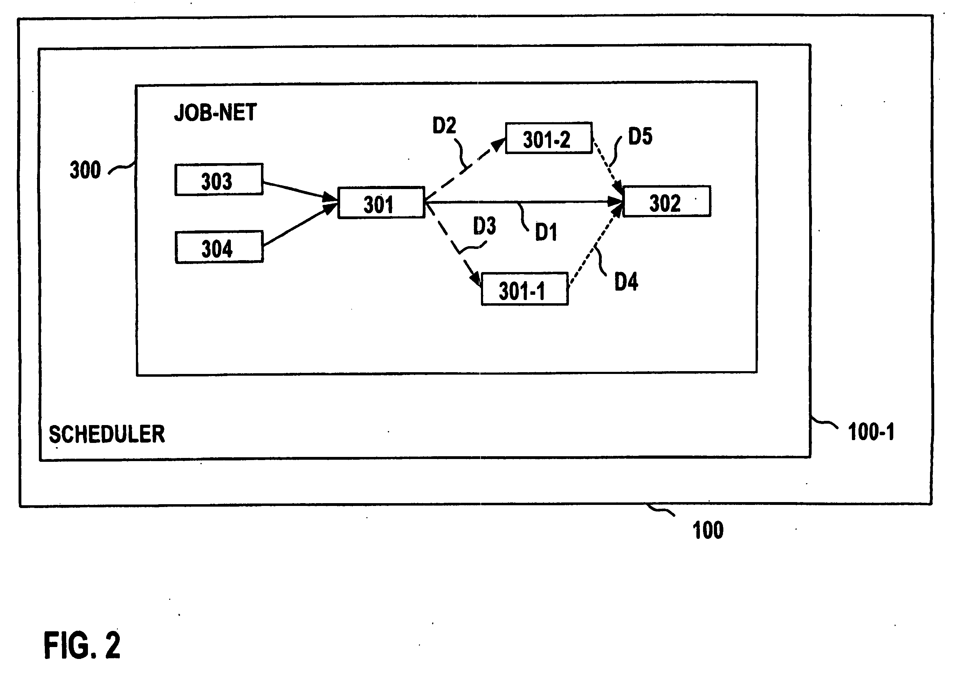

FIG. 2 is a simplified block diagram of scheduler 100-1 that includes job-net 300 in one embodiment of the invention. Scheduler 100-1 can be included in CPP 100. In alternative embodiments job-net 300 can be stored elsewhere and is accessible to scheduler 100-1. Job-net 300 defines the sequence of various jobs by having a start condition for each job. A start condition can include interdependencies between various jobs across multiple computer systems that communicate via network 990 (cf. FIG. 1). For example, in one implementation, scheduler 100-1 receives information about scheduled jobs from batch control processors of various computers that execute the jobs and builds job-net 300 accordingly.

In the example, job-net 300 includes representations of jobs 301 - 304 and representations of child jobs 301-1 and 301-2. In the following description the same reference numbers are used for a representation of a job in job-net 300 and the corresponding job executed by a computer.

Static dependencies between jobs are illustrated in FIG. 2 by straight solid lined arrows between the corresponding job representations. For example, static dependency D1 indicates that second job 302 is dependent on the successful completion of first job 301. Further static dependencies are defined between first job 301 and further jobs 303, 304.

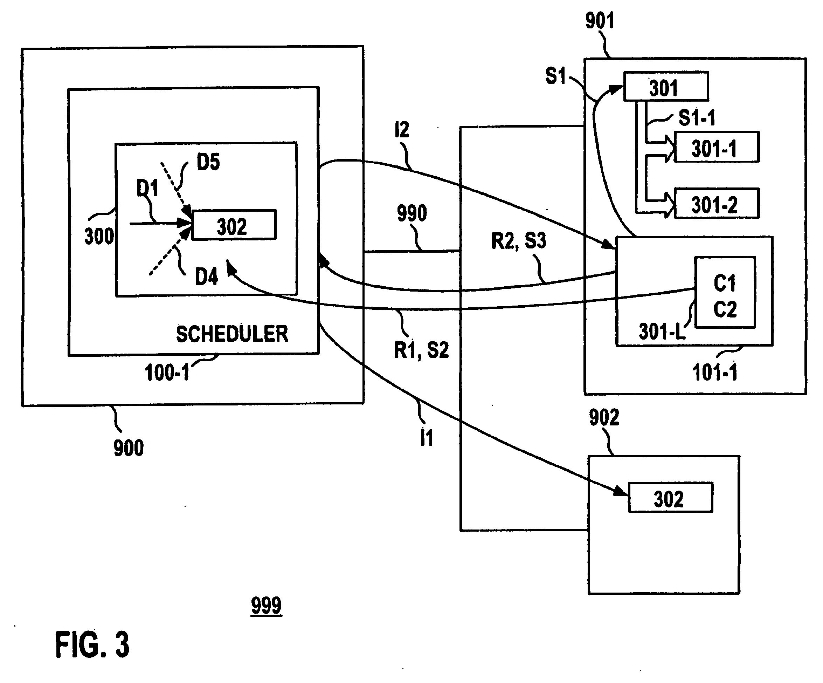

Dashed arrows indicate dependencies between child jobs and their parent jobs. These are dynamic dependencies because the dependency is dynamically created when a parent job creates S1-1 (cf. FIG. 3) a child job. For example, dynamic dependencies D3, D2 indicate that child jobs 301-2, 301-1 are dynamically dependent on first job 301. In other words, child jobs 301-1, 301-2 are represented in job-net 300 but their execution is initiated dynamically by first job 301 (rather than by scheduler 100-1) when first job 301 is started S1 (cf. FIG. 3) through, for example, scheduler 100-1.

Implicit dependencies between jobs are illustrated by dotted arrows. For example, implicit dependency D4 indicates that second job 302 not only has static dependency D1 on first job 301 but also an implicit dependency D4 on child job 301-1 of first job 301. In the example, this also applies to further child job 301-2 and implicit dependency D5. In other words, second job 302 should not start before the successful completion of first job 301 and child jobs 301-1, 301-2. In practice, often first job 301 is successfully completed right after having created its child jobs 301-1 and 301-2. Therefore, implicit dependencies become the critical dependencies because second job 302 might fail when specific data that is required as an input for a successful completion of second job 302 is not provided by the corresponding child jobs 301-1, 301-2 before second job 302 is started by scheduler 100-1.

A computer (e.g., computer 900, cf. FIG. 1) provides scheduler 100-1 that has job-net 300. For example, scheduler 100-1 sends an instruction to a corresponding computer to start S1 first job 301 according to a start condition for first job 301, such as a scheduled start time or, as shown in the example, by using static dependencies on further jobs 303, 304. First job 301 creates S1-1 at least child job 301-1. Child job 301-1 can run in the same computer as first job 301 or can run in any other computer that is connected, for example, via network 990. Second job 302 is implicitly dependent D4 on the successful completion of child job 301-1. First job 301 can create S1-1 at least a further child job (e.g., child job 301-2) creating a further implicit dependency D5. Scheduler 100-1 determines that first job 301 has at least further child job 301-1 and changes an initial start condition for second job 302 into an adjusted start condition so that second job 302 is not started before the successful completion of first job 301 and its at least one child job.

FIG. 3 illustrates how scheduler 100-1 can interact with batch control processor 101-1 in one embodiment of the invention.

After scheduler 100-1 has initiated 12 first job 301, first job 301 is started S1, for example, on first computer 901. First job 301 then creates S1-1 its child jobs 301-1, 301-2. Child jobs 301-1 and 301-2 can be executed by any computer (e.g., 900, 901, 902) in computer system 999.

In one implementation, scheduler 100-1 continuously (e.g., every minute, every 10 minutes or every hour, dependent on the type of job) sends requests to each computer where a job was initiated by the scheduler to retrieve the status of the job. Examples of the status of a job can be "job running", "job successfully completed" or "job terminated with error". For example, batch control processor 101-1 of first computer 901 traces the status of each job on first computer 901. When scheduler 100-1 initiates I2 first job 301 on first computer 901 and first job 301 subsequently creates S1-1 its child jobs 301-1 and 301-2, batch control processor 101-1 knows that first job 301 has child jobs 301-1 and 301-2. In the example, the underlying assumption is that the child jobs are created on the same computer (e.g., first computer 901) as the parent job. However, the child jobs can be created on any further computer of computer system 999. When batch control processor 101-1 receives a job status request of scheduler 100-1, it sends a job status information about first job 301 to scheduler 100-1. In one embodiment of the invention the job status information includes job-list 301-L of first job 301 generated by batch control processor 101-1. Job-list 301-L includes representations C1, C2 of child jobs 301-1, 301-2, respectively. Each representation can include a corresponding job identifier, such as a unique job name. Job-list 301-L can be implemented in any format that is appropriate to notify scheduler 100-1 of any child jobs of a specific job. Further information, such as an identifier of the computer that executes a corresponding child job, can be included in the job status information.

Once scheduler 100-1 has received R1 job-list 301-L, it changes the initial start condition for second job 302 on computer 902 into the adjusted start condition accordingly. In other words, scheduler 100-1 now includes implicit dependencies D4, D5 in the adjusted start condition for second job 302. Because scheduler 100-1 has been notified of the existence of child jobs through job-list 301-L, it requests a child status of each child job 301-1, 301-2 of first job 301 from the corresponding batch control processor (e.g., batch control processor 101-1).

In another implementation, batch control processor 101-1 automatically sends the status of first job 301 or of any of the child jobs 301-1, 301-2 to scheduler 100-1 after successful completion of the corresponding job or child job. Batch control processor 101-1 can also collect the child status of each successfully completed child job in a status queue for job-list 301-L and send the status queue to scheduler 100-1 when all child jobs of job-list 301-L are successfully completed.

Scheduler 100-1 receives R2 the child status of each child job 301-1, 301-2 from batch control processor 101-1. A status of first job 301 is received in the same step or earlier or later. For example, successful completion of first job 301 can occur right after having created S1-1 child jobs 301-1, 301-2.

For example, scheduler 100-1 continuously receives job and child job status information from batch control processor 101-1 of computer 901 and/or from any batch control processor of any further computer in computer system 999.

For example, by receiving a further job-list from a child job (e.g., child job 301-1), scheduler 100-1 can find out about further child jobs of child jobs.

Once the child status of child jobs 301-1, 302-1 indicate the successful completion of the child jobs 301-1, 301-2 and the status of first job 301 indicates the successful completion of first job 301, the adjusted start condition of second job 302 is fulfilled and scheduler 100-1 can initiate I1 second job 302, for example, on computer 902.

In an alternative embodiment of the invention the job status information that is sent by batch control processor 101-1 to scheduler 100-1 can include a representation of each child job and its corresponding parent job known by batch control processor 101-1. In this case scheduler 100-1 determines the child jobs of a specific job (e.g., first job 301) by evaluating the parent-child relations for the specific job in the job status information. For example, the result of this evaluation with regards to first job 301 corresponds to job-list 301-L.

Depending on the number of static and implicit dependencies of a job, a complex start condition for the job can occur. Scheduler 100-1 evaluates the adjusted start condition and determines an appropriate start time for the job. For example, if necessary, the scheduler delays a predefined start time for the job until the adjusted start condition is fulfilled to provide an environment that does not cause the job to fail. In other words, no matter on which computer a job or child job is executed, scheduler 100-1 is able to consider any dependency, whether it is a static, dynamic or implicit dependency, when adjusting start conditions across multiple computers to delay the start of a dependent job until the corresponding start condition is fulfilled.
In an alternative embodiment of the invention all jobs can be executed on one computer (e.g., computer 900).

## Claims

1. A method for job scheduling in the presence of child jobs comprising the following steps:
a scheduler (100-1) defining a static dependency (D1) between a first job (301) and a second job (302) as an initial start condition for the second job (302) so that the start of the second job (302) depends on the successful completion of the first job (301);
the scheduler (100-1) determining that the first job (301) has at least one child job (301-1), wherein the child job (301-1) is started by the first job (301); and
the scheduler (100-1) changing the initial start condition into an adjusted start condition for the second job (302) by adding an implicit dependency (D4) so that the start of the second job (302) further depends on the successful completion of the at least one child job (301-1).

2. The method of claim 1, wherein the determining step comprises the further steps:
the scheduler (100-1) receiving (R1) a job-list (301-L) of the first job (301); and
the scheduler (100-1) deriving from the received job-list (301-L) that the first job (301) has at least one child job (301-1).

3. The method of claim 1 or 2, comprising the further step:
the scheduler (100-1) initiating (I1) the start of the second job (302) if the adjusted start condition is fulfilled.

4. The method of claim 1 or 2, comprising the further steps:
the scheduler (100-1) receiving (R2) a status of the first job (301) and a child status of the at least one child job (301-1); and
the scheduler (100-1) evaluating the adjusted start condition with regards to the status of the first job (301) and the child status of the at least one child job (301-1).

5. The method of claims 3 or 4, wherein the first job (301) is initiated (12) on a first computer (901) of a computer system (999) and the second job (302) is initiated (11) on a second computer (902) of the Computer system (999).

6. The method of anyone of the claims 1 to 5, wherein the at least one child job (301-1) is initiated on a further computer of the computer system (999).

7. A computer (900) for job scheduling in the presence of child jobs comprising a memory (920) and a processor (910);
the memory (920) storing a scheduler (100-1) that defines a static dependency (D1) between a first job (301) and a second job (302) as an initial start condition for the second job (302) so that the start of the second job (302) depends on the successful completion of the first job (301); and
the scheduler (100-1) comprising instructions for the processor (910) to determine that the first job (301) has at least one child job (301-1), wherein the child job (301-1) is started by the first job (301) and comprising further instructions for the processor (910) to change the initial start condition into an adjusted start condition for the second job (302) by adding an implicit dependency (D4) so that the start of the second job (302) further depends on the successful completion of the at least one child job (301-1).

8. The computer (900) of Claim 7, wherein the scheduler (100-1) comprises further instructions for the processor (910) to initiate (I1) the start of the second job (302) if the adjusted start condition is fulfilled.

9. A computer program product comprising a scheduler (100-1) for job scheduling in the presence of child jobs; the scheduler (100-1), when loaded into a memory (920) of a computer (900), causing at least one processor (910) of the computer (900) to execute the following steps:
defining a static dependency (D1) between a first job (301) and a second job (302) as an initial start condition for the second job (302) so that the start of the second job (302) depends on the successful completion of the first job (301)
determining that the first job (301) has at least one child job (301-1), wherein the child job (301-1) is started by the first job (301); and
changing the initial start condition into an adjusted start condition for the second job (302) by adding an implicit dependency (D4) so that the start of the second job (302) further depends on the successful completion of the at least one child job (301-1).

10. The computer program product of claim 9, causing the at least one processor (910) to execute the further step:
initiating (I1) the start of the second job (302) if the adjusted start condition is fulfilled.

11. The computer program product of claim 9 or 10, causing the at least one processor (910) to execute the determining step by
receiving (R1) a job-list (301-L) of the first job (301); and
deriving from the received job-list (301-L) that the first job (301) has at least one child job (301-1).

## Patentansprüche

1. Verfahren zum Job Scheduling bzw. zur Jobablaufplanung bei Vorhandensein von Unter- bzw. Kinderjobs, umfassend die folgenden Schritte:
einen Scheduler bzw. Planer (100-1), der eine statische Abhängigkeit (D1) zwischen einem ersten Job (301) und einem zweiten Job (302) als eine anfängliche Startbedingung für den zweiten Job (302) definiert, so dass der Start des zweiten Jobs (302) von der erfolgreichen Beendigung des ersten Jobs (301) abhängt;
wobei der Scheduler (100-1) bestimmt, dass der erste Job (301) zumindest einen Unter- bzw. Kinderjob (301-1) aufweist, wobei der Unterjob (301-1) durch den ersten Job (301) gestartet wird; und
der Scheduler (100-1) die anfängliche Startbedingung in eine eingestellte bzw. angepasste Startbedingung für den zweiten Job (302) ändert, indem er eine implizite Abhängigkeit (D4) hinzufügt bzw. -addiert, so dass der Start des zweiten Jobs (302) ferner von der erfolgreichen Beendigung des zumindest einen Unterjobs (301-1) abhängt.

2. Verfahren nach Anspruch 1, wobei der Bestimmungsschritt die weiteren Schritte umfasst:
der Scheduler (100-1) empfängt (R1) eine Jobliste (301-L) des ersten Jobs (301); und
der Scheduler (100-1) leitet von der empfangenen Jobliste (301-L) ab, dass der erste Job (301) zumindest einen Unterjob (301-1) aufweist.

3. Verfahren nach Anspruch 1 oder 2, umfassend den weiteren Schritt:
der Scheduler (100-1) initiiert (I1) den Start des zweiten Jobs (302), wenn die eingestellte Startbedingung erfüllt ist.

4. Verfahren nach Anspruch 1 oder 2, umfassend den weiteren Schritt:
der Scheduler (100-1) empfängt (R2) einen Status des ersten Jobs (301) und einen Unter- bzw. Kinderstatus des zumindest einen Unterjobs (301-1); und
der Scheduler (100-1) wertet die eingestellte Startbedingung bezüglich des Status des ersten Jobs (301) und des Unterstatus des zumindest einen Unterjobs (301-1) aus.

5. Verfahren nach Anspruch 3 oder 4, wobei der erste Job (301) auf einem ersten Computer (901) eines Computersystems (999) initiiert (12) wird und der zweite Job (302) auf einem zweiten Computer (902) des Computersystems (999) initiiert (I1) wird.

6. Verfahren nach einem der Ansprüche 1 bis 5, wobei der zumindest eine Unterjob (301-1) auf einem weiteren Computer des Computersystems (999) initiiert wird.

7. Computer (900) zum Job Scheduling bzw. zur Jobablaufplanung bei Vorhandensein von Unter- bzw. Kinderjobs, umfassend einen Speicher (920) und einen Prozessor (910);
wobei der Speicher (920) einen Scheduler bzw. Planer (100-1) speichert, der eine statische Abhängigkeit (D1) zwischen einem ersten Job (301) und einem zweiten Job (302) als eine anfängliche Startbedingung für den zweiten Job (302) definiert, so dass der Start des zweiten Jobs (302) von der erfolgreichen Beendigung des ersten Jobs (301) abhängt; und
wobei der Scheduler (100-1) Instruktionen für den Prozessor (910) umfasst, um zu bestimmen, dass der erste Job (301) zumindest einen Unter- bzw. Kinderjob (301-1) aufweist, wobei der Unterjob (301-1) durch den ersten Job (301) gestartet wird; und weitere Instruktionen für den Prozessor (910) umfasst, um die anfängliche Startbedingung in eine eingestellte bzw. angepasste Startbedingung für den zweiten Job (302) zu ändern, indem er eine implizite Abhängigkeit (D4) hinzufügt bzw. -addiert, so dass der Start des zweiten Jobs (302) ferner von der erfolgreichen Beendigung des zumindest einen Unterjobs (301-1) abhängt.

8. Computer (900) nach Anspruch 7, wobei der Scheduler (100-1) weitere Instruktionen für den Prozessor (910) umfasst, um den Start des zweiten Jobs (302) zu initiieren (I1), wenn die eingestellte Startbedingung erfüllt ist.

9. Computerprogrammprodukt, umfassend einen Scheduler bzw. Planer (100-1) zum Job Scheduling bzw. zur Jobablaufplanung bei Vorhandensein von Unter- bzw. Kinderjobs; wobei der Scheduler (100-1), wenn er in den Speicher (920) eines Computers (900) geladen ist, zumindest einen Prozessor (910) des Computers (900) veranlasst, die folgenden Schritte auszuführen:
Definieren einer statischen Abhängigkeit (D1) zwischen einem ersten Job (301) und einem zweiten Job (302) als eine anfängliche Startbedingung für den zweiten Job (302), so dass der Start des zweiten Jobs (302) von der erfolgreichen Beendigung des ersten Jobs (301) abhängt;
Bestimmen, dass der erste Job (301) zumindest einen Unter- bzw. Kinderjob (301-1) aufweist, wobei der Unterjob (301-1) durch den ersten Job (301) gestartet wird; und
Ändern der anfänglichen Startbedingung zu einer bzw. in eine eingestellte bzw. angepasste Startbedingung für den zweiten Job (302) durch Hinzufügen bzw. Addieren einer impliziten Abhängigkeit (D4), so dass der Start des zweiten Jobs (302) ferner von der erfolgreichen Beendigung des zumindest einen Unterjobs (301-1) abhängt.

10. Computerprogrammprodukt nach Anspruch 9, das den zumindest einen Prozessor (910) veranlasst, den weiteren Schritt auszuführen:
Initiieren (I1) des Starts des zweiten Jobs (302), wenn die eingestellte Startbedingung erfüllt ist.

11. Computerprogrammprodukt nach Anspruch 9 oder 10, das den zumindest einen Prozessor (910) veranlasst, den Bestimmungsschritt auszuführen durch
Empfangen (R1) einer Jobliste (301-L) des ersten Jobs (301); und
Ableiten von der empfangenen Jobliste (301-L), dass der erste Job (301) zumindest einen Unterjob (301-1) aufweist.

## Revendications

1. Procédé d'ordonnancement des tâches en présence de tâches enfant comprenant les étapes suivantes :
un ordonnanceur (100-1) définissant une dépendance statique (D1) entre une première tâche (301) et une seconde tâche (302) en tant que condition de démarrage initiale pour la seconde tâche (302) de sorte que le démarrage de la seconde tâche (302) dépend de la réalisation réussie de la première tâche (301) ;
l'ordonnanceur (100-1) déterminant que la première tâche (301) possède au moins une tâche enfant (301-1), dans lequel la tâche enfant (301-1) est démarrée par la première tâche (301) ; et
l'ordonnanceur (100-1) changeant la condition de démarrage initiale en une condition de démarrage ajustée pour la seconde tâche (302) en ajoutant une dépendance implicite (D4) de sorte que le démarrage de la seconde tâche (302) dépend en outre de la réalisation réussie de l'au moins une tâche enfant (301-1).

2. Procédé selon la revendication 1, dans lequel l'étape de détermination comprend les étapes supplémentaires :
l'ordonnanceur (100-1) recevant (R1) une liste de tâches (301-L) de la première tâche (301) ; et
l'ordonnanceur (100-1) dérivant de la liste de tâches reçue (301-L) que la première tâche (301) possède au moins une tâche enfant (301-1).

3. Procédé selon la revendication 1 ou 2, comprenant l'étape supplémentaire :
l'ordonnanceur (100-1) amorçant (I1) le démarrage de la seconde tâche (302) si la condition de démarrage ajustée est satisfaite.

4. Procédé selon la revendication 1 ou 2, comprenant les étapes supplémentaires :
l'ordonnanceur (100-1) recevant (R2) un statut de la première tâche (301) et un statut enfant de l'au moins une tâche enfant (301-1) ; et
l'ordonnanceur (100-1) évaluant la condition de démarrage ajustée par rapport au statut de la première tâche (301) et au statut enfant de l'au moins une tâche enfant (301-1).

5. Procédé selon la revendication 3 ou 4, dans lequel la première tâche (301) est amorcée (12) sur un premier ordinateur (901) d'un système informatique (999) et la seconde tâche (302) est amorcée (I1) sur un second ordinateur (902) du système informatique (999).

6. Procédé selon l'une quelconque des revendications 1 à 5, dans lequel l'au moins une tâche enfant (301-1) est amorcée sur un autre ordinateur du système informatique (999).

7. Ordinateur (900) pour l'ordonnancement de tâches en présence de tâches enfant comprenant une mémoire (920) et un processeur (910) ;
la mémoire (920) stockant un ordonnanceur (100-1) qui définit une dépendance statique (D1) entre une première tâche (301) et une seconde tâche (302) en tant que condition de démarrage initiale pour la seconde tâche (302) de sorte que le démarrage de la seconde tâche (302) dépend de la réalisation réussie de la première tâche (301) ; et
l'ordonnanceur (100-1) comprenant des instructions pour le processeur (910) pour déterminer que la première tâche (301) possède au moins une tâche enfant (301-1), dans lequel la tâche enfant (301-1) est démarrée par la première tâche (301) et comprenant des instructions supplémentaires pour le processeur (910) pour changer la condition de démarrage initiale en une condition de démarrage ajustée pour la seconde tâche (302) en ajoutant une dépendance implicite (D4) de sorte que le démarrage de la seconde tâche (302) dépend en outre de la réalisation réussie de l'au moins une tâche enfant (301-1).

8. Ordinateur (900) selon la revendication 7, dans lequel l'ordonnanceur (100-1) comprend des instructions supplémentaires pour le processeur (910) pour amorcer (I1) le démarrage de la seconde tâche (302) si la condition de démarrage ajustée est satisfaite.

9. Produit de programme informatique comprenant un ordonnanceur (100-1) pour l'ordonnancement de tâches en présence de tâches enfant ; l'ordonnanceur (100-1), lorsqu'il est chargé dans une mémoire (920) d'un ordinateur (900), provoquant l'exécution par au moins un processeur (910) de l'ordinateur (900) des étapes suivantes :
définir une dépendance statique (D1) entre une première tâche (301) et une seconde tâche (302) en tant que condition de démarrage initiale pour la seconde tâche (302) de sorte que le démarrage de la seconde tâche (302) dépend de la réalisation réussie de la première tâche (301);
déterminant que la première tâche (301) possède au moins une tâche enfant (301-1), dans lequel la tâche enfant (301-1) est démarrée par la première tâche (301) ; et
changer la condition de démarrage initiale en une condition de démarrage ajustée pour la seconde tâche (302) en ajoutant une dépendance implicite (D4) de sorte que le démarrage de la seconde tâche (302) dépend en outre de la réalisation réussie de l'au moins une tâche enfant (301-1).

10. Produit de programme informatique selon la revendication 9, provoquant l'exécution par l'au moins un processeur (910) de l'étape supplémentaire :
amorcer (I1) le démarrage de la seconde tâche (302) si la condition de démarrage ajustée est satisfaite.

11. Produit de programme informatique selon la revendication 9 ou 10, provoquant l'exécution par l'au moins un processeur (910) de l'étape de détermination en recevant (R1) une liste de tâches (301-L) de la première tâche (301) ; et
dérivant de la liste de tâches reçue (301-L) que la première tâche (301) possède au moins une tâche enfant (301-1).
